# EUROPEAN PATENT APPLICATION

(11) **EP 2 650 494 A2**
(43) Date of publication of application: **16.10.2013**
(21) Application number: 13162856.2
(22) Date of filing: 09.04.2013
(51) Int. Cl.: F01K 17/02

(54) **Combined power and water production system and method**

(30) Priority: 12.04.2012 US 201213445025
(71) Applicant: General Electric Company, Schenectady, New York 12345 (US)
(72) Inventor: Muthuramalingam, Mahendhra, 560066 Bangalore, Karnataka (IN)
(74) Representative: Cleary, Fidelma

(57) **Abstract**

A combined power and water production system includes a steam generator (10), a water production facility (30), and a heater (40) to heat water and to provide the heated water to the steam generator (10) to generate steam.

## Description

The subject matter disclosed herein relates to combined power and water production systems.

Combined power and water production systems generate steam and use the steam to drive steam turbines to produce power. The steam is also used to produce water after expansion in a turbine. For example, the steam may be used in a desalination plant to heat saltwater to extract waste and produce potable water.

Combined power and water production systems generate ratios of power to water at differing levels, depending upon the design requirements of the system. To produce the varying ratios of water and power, a heat recovery steam generator (HRSG) having multiple steam drums is used. The multiple steam drums provide output steam at varying temperatures and pressures. The HRSG receives high temperature gas from a gas turbine exhaust and is sometimes augmented by supplementary firing to produce additional steam for water and/or power production. For increasing levels of supplementary firing in the HRSG, the steam production capability of intermediate and lower pressure drums decreases and overall efficiency of the HRSG and water or power plant decreases. Specifically, the subject matter disclosed herein relates to a system for extracting a portion of steam from steam turbine to heat water entering a power generator to improve system efficiency when varying levels of supplementary firing is adopted to achieve power to water ratios.

According to one aspect of the invention, a combined power and water production system includes a steam generator to generate steam; a power generating assembly to receive the steam from the steam generator, to generate power using the steam, and to output exhaust; a water producing facility to receive the exhaust from the power generating assembly and to use the exhaust to produce first liquid water; and a heater to heat second liquid water and to provide the second liquid water heated by the heater to the steam generator to generate the steam.

According to another aspect of the invention, a method of providing water and power in a combined water and power production system includes generating steam at a steam generator, providing the steam to a power generation assembly to generate power, providing the steam to a water production facility to produce first liquid water, and heating second liquid water used by the steam generator prior to supplying the second liquid water to the steam generator.

According to yet another aspect of the invention a combined power and water generation system includes a steam generator to generate steam; a power generation assembly to generate power with the steam; a water production facility to receive non-potable water and to use the steam to produce potable water; and a heater to heat water before the water is provided to the steam generator.

These and other advantages and features will become more apparent from the following description taken in conjunction with the drawings.

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a block diagram of a combined power and water generation system according to an embodiment of the invention.
FIG. 2 is a diagram of a combined power and water generation system.
FIG. 3 is a block diagram of a heat recovery steam generator according to one embodiment of the invention.
FIG. 4 is a block diagram of a heat recovery steam generator according to another embodiment of the invention.
FIG. 5 is a flowchart illustrating a method of operating a combined power and water generation system according to an embodiment of the invention.

The detailed description explains embodiments of the invention, together with advantages and features, by way of example with reference to the drawings.

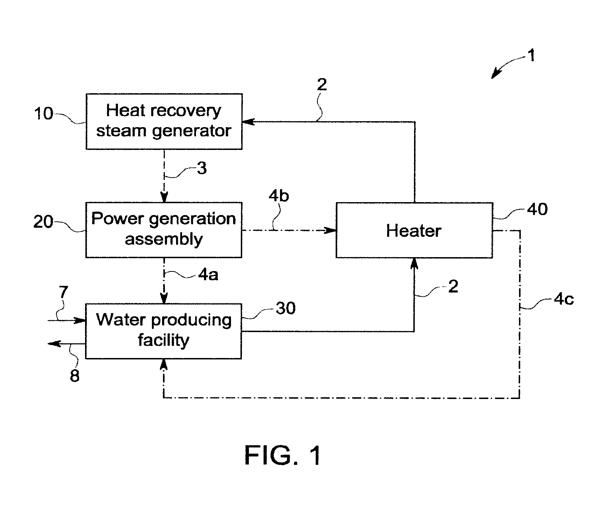

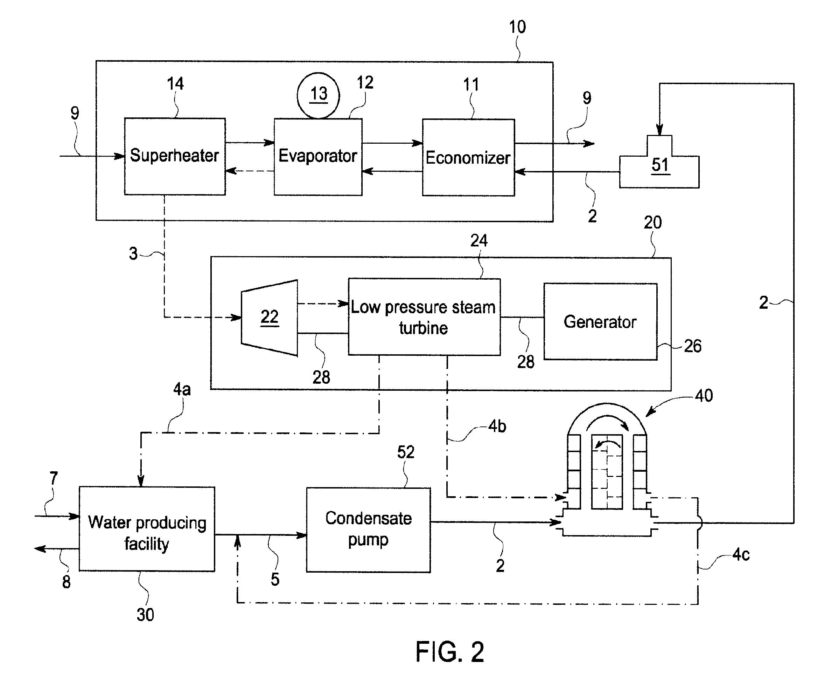

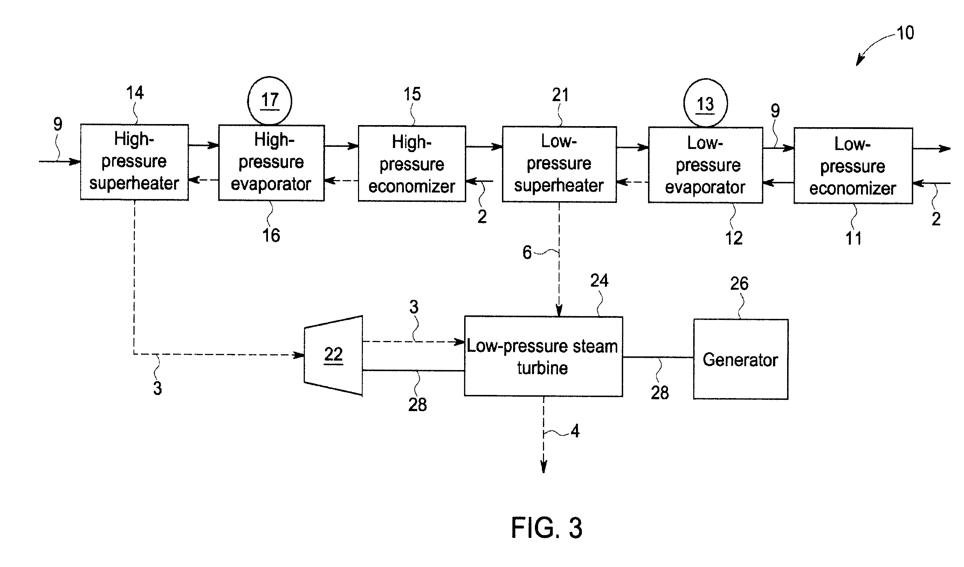

FIG. 1 illustrates a block diagram of a combined power and water system 1 ("the system 1") according to one embodiment. The system 1 includes a heat recovery steam generator ("HRSG") 10, a power generation assembly 20, a water producing facility 30, and a heater 40. In the figures, the solid arrows 2, 7, and 8 represent liquid water, the solid arrow 5 (FIG. 2) represents residual water from the water producing facility 30, the dashed arrow 3 (and 6 in FIG. 3) represents steam from the HRSG 10, the dashed and dotted arrow 4 represents steam from the power generation assembly 20, and the arrow 9 represents a gas stream.

The HRSG 10 receives a gas stream 9 and receives water 2 from the heater 40. In one embodiment, the gas stream 9 is introduced to the HRSG 10 as a heated gas stream, and the HRSG 10 converts the water to steam at one or more predetermined pressures and temperatures using the heated gas stream 9 and outputs the steam 3 to the power generation assembly 20 to drive the power generation assembly 20. The power generation assembly 20 uses the steam 3 to generate power. Steam 4 from the power generation assembly 20 is supplied to each of the water producing facility 30 and the heater 40.

The water producing facility 30 uses exhaust steam 4a to convert input liquid water 7 into output liquid water 8. According to one embodiment, the water producing facility 30 is a desalination facility, the input liquid water 7 is saltwater, and the output liquid water 8 is potable water. The desalination facility heats the saltwater 7 with the exhaust steam 4a to extract waste from the saltwater to produce the potable water 8.

The heater 40 receives steam 4b from the power generation assembly 20 and liquid water 2 from the water producing facility 30 and heats the liquid water 2 prior to providing the liquid water 2 to the HRSG 10. Since the liquid water 2 is heated prior to being provided to the HRSG 10, less energy is required by the HRSG 10 to convert the liquid water 2 to steam 3, making the HRSG 10 more efficient. In one embodiment, the steam 4b is extracted from the low pressure steam turbine 24 upstream from the exhaust, so that the steam 4b provided to the heater 40 has a higher energy level than the steam 4a provided to the water producing facility 30.

FIG. 2 illustrates in more detail a combined power and water system 1 according to one embodiment.

In the embodiment illustrated in FIG. 2, the power generation assembly 20 includes a high-pressure steam turbine 22, a low-pressure steam turbine 24, and a generator 26. The high-pressure steam turbine 22 receives the steam 3 from the HRSG 10 which drives a shaft 28. After driving the high-pressure steam turbine 22, the steam 3 is then provided to a low-pressure steam turbine 24. The shaft 28, which is connected to the high-pressure steam turbine 22 and the low-pressure steam turbine 24 drives the generator 26 to generate power.

Although FIG. 2 illustrates only a high-pressure steam turbine 22 and a low-pressure steam turbine 24, any number and type of turbines may be used. For example, the power generation assembly 20 may include one or more intermediate-pressure steam turbines, multiple high- or low-pressure steam turbines 22 and 24, and dual-flow steam turbines. In alternative embodiments, the power generation assembly may include one or more gas turbines. In yet other embodiments, the power generation assembly includes multiple generators 26, and the high-pressure steam turbine 22 may be connected to a different shaft than the low-pressure steam turbine 24 to drive a different generator 26 than the low-pressure steam turbine 24.

The HRSG 10 includes an economizer 11 to heat the liquid water 2, an evaporator 12 including a steam drum 13 to evaporate the water from the economizer 11 to generate steam, and a superheater 14 to heat the steam 3 and output the steam to the power generation assembly 20. According to alternative embodiments, the HRSG 10 includes multiple evaporators to generate steam at different pressure levels.

FIG. 3 illustrates an example of an embodiment in which the HRSG 10 includes multiple evaporators. In FIG. 3, the low-pressure economizer 11 heats the liquid water 2 and outputs the heated liquid water 2 to the low-pressure evaporator 12, which corresponds to the evaporator 12 of FIG. 2. The low-pressure evaporator 12 evaporates the water 2 to generate steam, and outputs the steam to a low-pressure superheater 21, which outputs steam 6 at a low pressure to the low-pressure steam turbine 24. The liquid water 2 is also output to a high-pressure economizer 15 to heat the liquid water 2 and to output the heated liquid water 2 to a high-pressure evaporator 16 including a steam drum 17. The high-pressure evaporator 16 outputs the steam to the superheater 14, which further heats the steam and outputs the steam 3 to the high-pressure steam turbine 22.

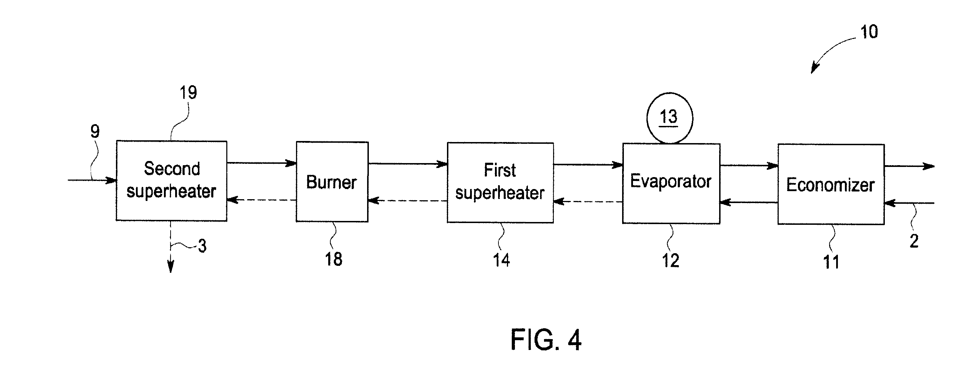

According to another embodiment, illustrated in FIG. 4, the HRSG 10 includes a burner 18 to further heat a gas stream in the HRSG 10 to enable additional steam production. The burner 18 is located between a first superheater 14, corresponding to the superheater 14 of FIG. 2, and a second superheater 19. The heated and pressurized steam 3 is output to the power generation assembly 20 from the second superheater 19.

While FIGS. 2-4 illustrate different embodiments of the HRSG 10, according to various embodiments, the HRSG 10 may include any number and variety of economizers, evaporators, superheaters, and burners to generate steam at varying temperatures and pressures.

Referring to FIG. 2, the water producing facility 30 receives the exhaust steam 4a from the low-pressure steam turbine 24, and uses the exhaust steam 4a to produce liquid water 8. According to one embodiment, the input liquid water 7 is saltwater and the output liquid water 8 is potable water. The exhaust steam 4a is used to heat the saltwater to separate the salt and waste in the water from the water, producing the potable water 8. After producing the output liquid water 8, the water producing facility 30 outputs excess exhaust steam 4a as residual water 5. The residual water 5 may be a condensate or steam, or a combination of condensate and steam. A condensate pump 52 pumps the residual water 5, and transmits the resulting liquid water 2 to the heater 40. In the embodiment illustrated in FIG. 2, the heater 40 is a feedwater heater. The liquid water 2 is heated by the steam 4b and transmitted to a reservoir 51, also known as a deaerator. The pre-heated liquid water 2 is transmitted to the HRSG 10 to generate steam 3, and since the liquid water 2 is already heated, the HRSG 10 operates more efficiently, because less energy is expended to heat and evaporate the water in the HRSG 10. In particular, in an embodiment in which multiple evaporators are utilized, such as in the embodiment illustrated in FIG. 3, the pre-heating of the liquid water 2 by the heater 40 enables the use of additional evaporators to provide steam at additional pressures.

In one embodiment, after heating the liquid water 2 in the heater 40, the steam 4c is combined with the residual water 5 and condensed into the liquid water 2, which is then used by the HRSG 10 to generate steam 3, as discussed above. Consequently, the steam 4c and residual water 5 are recovered and re-used to generate power at the power generation assembly 20 and to produce potable liquid water 8 at the water producing facility 30.

It is understood by the present disclosure that the liquid water 2, 7, and 8, the steam 4, the residual water 5, and the steam 3 and 6 represent flows of molecules rather than specific molecules at one location at one point in time. For example, in some embodiments disclosed in the specification and recited in the claims, the steam 4b is described as heating the second liquid water 2, then being condensed and becoming a part of the second liquid water 2 that is heated by the steam 4b. This disclosure does not mean that molecules in the steam 4b having a gaseous form heat themselves in a liquid form. Instead, molecules that make up a gaseous flow of steam 4c are condensed into liquid form to become part of the second liquid water 2. Then, the molecules that now make up the second liquid water 2 are heated by subsequent molecules that make up the flow of steam 4b.

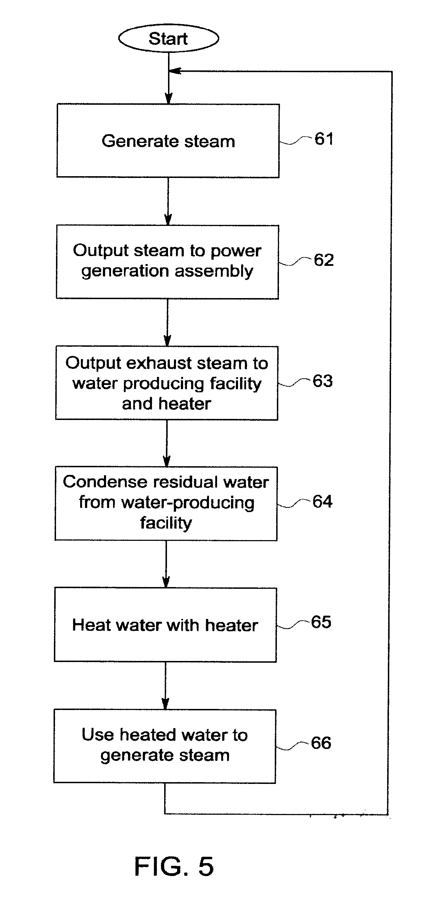

FIG. 5 illustrates a method of producing power and water according to an embodiment of the invention. In operation 61, steam is generated by a steam generator, such as by an HRSG 10 illustrated in FIGS. 1-4. In operation 62, the steam is output to a power generation assembly to generate power using the steam. In operation 63, exhaust from the power generation assembly is provided to a water producing facility to produce water. For example, if the water producing facility is a desalination plant, the exhaust heats saltwater to separate the water in the saltwater from the salt and other waste. According to some embodiments, steam is provided to the water producing facility directly from a steam generator, such as an HRSG 10 either instead of or in addition to the exhaust from the power generation assembly.

In operation 64, residual water from the water producing facility is condensed into liquid water. In operation 65, the liquid water is heated by a heater. In one embodiment, the heater is a feedwater heater that uses heated exhaust from the power generation assembly to heat the liquid water in the heater.

In operation 66, the heated liquid water is provided to the steam generator to generate steam, and the cycle begins again at operation 61. Since the liquid water is heated prior to being supplied to the steam generator, the steam generator is able to operate with increased efficiency.

According to the above embodiments since liquid water is heated prior to being provided to a steam generator, less energy is required to convert the liquid water to steam, and the steam generator is able to operate with increased efficiency. In particular, for varying levels of power to water ratio, increasing the temperature of the liquid water prior to providing the liquid water to the steam generator allows the power generator to be operated at higher levels of efficiency. In addition, exhaust from a power generating unit such as a steam turbine is used to produce potable water, heat water provided to an HRSG, and is then converted into the water to be provided to the HRSG to generate steam for the steam turbine. Thus, the water and steam is recycled within the HRSG/power generation/water generation system to operate with increased efficiency.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A combined power and water production system, comprising:
   a steam generator to generate steam;
   a power generating assembly to receive the steam from the steam generator, to generate power using the steam, and to output exhaust;
   a water producing facility to receive the exhaust from the power generating assembly and to use the exhaust to produce first liquid water; and
   a heater to heat second liquid water and to provide the second liquid water heated by the heater to the steam generator to generate the steam.
2. The combined power and water production system of clause 1, wherein the steam generator is a heat recovery steam generator (HRSG) having at least one economizer to increase a temperature the second liquid water, at least one evaporator to evaporate the second liquid water from the at least one economizer to generate the steam, and at least one superheater to superheat the steam.
3. The combined power and water production system of any preceding clause, wherein the HRSG includes at least two evaporators to output steam from the HRSG to the power generating assembly at different pressures.
4. The combined power and water production system of any preceding clause, wherein the HRSG includes at least one burner to increase a temperature of the steam.
5. The combined power and water production system of any preceding clause, wherein the power generating assembly includes at least one steam turbine.
6. The combined power and water production system of any preceding clause, wherein the at least one steam turbine includes at least one high-pressure steam turbine and at least one low-pressure steam turbine.
7. The combined power and water production system of any preceding clause, wherein the exhaust output from the power generating assembly is heated steam.
8. The combined power and water production system of any preceding clause, wherein the exhaust is provided to the heater to heat the second liquid water.
9. The combined power and water production system of any preceding clause, wherein the water producing facility is a desalination plant, and
   the exhaust is output from the water producing facility as residual water.
10. The combined power and water production system of any preceding clause, further comprising a condenser to condense the residual water.
11. The combined power and water production system of any preceding clause, wherein the exhaust is provided to the heater to heat the second liquid water, and
   the exhaust output from the heater is condensed by the condenser.
12. The combined power and water production system of any preceding clause, wherein the condenser outputs the second liquid water to the heater.
13. The combined power and water production system of any preceding clause, wherein:
   the power generating assembly is a steam turbine, the water producing facility is a desalination plant, and the heater is a feedwater heater,
   the first liquid water is potable water output from the water producing facility,
   the exhaust from the power generating assembly is heated steam and is provided to the water producing facility to heat saltwater to produce the potable water,
   the second liquid water includes residual water output from the water producing facility, and
   the exhaust from the power generating assembly is provided to the feedwater heater to the heat the residual water output from the water producing facility.
14. A method of providing water and power in a combined water and power production system, the method comprising:
   generating steam at a steam generator;
   providing the steam to a power generation assembly to generate power;
   providing the steam to a water production facility to produce first liquid water; and
   heating second liquid prior to supplying the second liquid water to the steam generator to generate the steam.
15. The method of any preceding clause, wherein heating the second liquid water used by the steam generator includes heating the second liquid water with exhaust from the power generation assembly.
16. The method of any preceding clause, wherein the first liquid water is potable water, and
   the water production facility uses the steam to produce the potable water and emits residual water composed of water from the steam after the steam is used to produce the potable water.
17. The method of any preceding clause, wherein the second liquid water includes the residual water, and
   the method further comprises condensing the residual water from the water production facility.
18. The method of any preceding clause, further comprising condensing exhaust steam output by the power generation assembly and used to heat the second liquid water,
   wherein the second liquid water includes condensed exhaust steam previously used to heat the second liquid water.
19. A combined power and water generation system, comprising:
   a steam generator to generate steam;
   a power generation assembly to generate power with the steam;
   a water production facility to receive non-potable water and to use the steam to produce potable water; and
   a heater to heat water before the water is provided to the steam generator.
20. The combined power and water generation system of any preceding clause, wherein the water production facility receives the steam from the power generation assembly,
   the heater heats the water using steam output from the power generation assembly, and
   at least a portion of the water heated by the heater is condensed steam from the water production facility.

## Claims

1. A combined power and water production system (1), comprising:
a steam generator (10) to generate steam;
a power generating assembly (20) to receive the steam from the steam generator (10), to generate power using the steam, and to output exhaust;
a water producing facility (30) to receive the exhaust from the power generating assembly (20) and to use the exhaust to produce first liquid water; and
a heater (40) to heat second liquid water and to provide the second liquid water heated by the heater to the steam generator to generate the steam.

2. The combined power and water production system of claim 1, wherein the steam generator (10) is a heat recovery steam generator (HRSG) having at least one economizer (11) to increase a temperature the second liquid water, at least one evaporator (12) to evaporate the second liquid water from the at least one economizer to generate the steam, and at least one superheater (14) to superheat the steam.

3. The combined power and water production system of claim 2, wherein the HRSG includes at least two evaporators (12,16) to output steam from the HRSG to the power generating assembly at different pressures.

4. The combined power and water production system of claim 2 or claim 3, wherein the HRSG includes at least one burner (18) to increase a temperature of the steam.

5. The combined power and water production system of any preceding claim, wherein the power generating assembly includes at least one steam turbine (22,24).

6. The combined power and water production system of claim 5, wherein the at least one steam turbine includes at least one high-pressure steam turbine (22) and at least one low-pressure steam turbine (24).

7. The combined power and water production system of claim 5 or claim 6, wherein the exhaust output from the power generating assembly (20) is heated steam.

8. The combined power and water production system of claim 7, wherein the exhaust is provided to the heater (40) to heat the second liquid water.

9. The combined power and water production system of claim 7 or claim 8, wherein the water producing facility (30) is a desalination plant, and
the exhaust is output from the water producing facility (30) as residual water.

10. The combined power and water production system of claim 9, further comprising a condenser to condense the residual water.

11. The combined power and water production system of claim 10, wherein the exhaust is provided to the heater (40) to heat the second liquid water, and
the exhaust output from the heater is condensed by the condenser.

12. The combined power and water production system of claim 11, wherein the condenser outputs the second liquid water to the heater.

13. The combined power and water production system of any preceding claim, wherein:
the power generating assembly (20) is a steam turbine, the water producing facility is a desalination plant, and the heater is a feedwater heater,
the first liquid water is potable water output from the water producing facility (30),
the exhaust from the power generating assembly (20) is heated steam and is provided to the water producing facility to heat saltwater to produce the potable water,
the second liquid water includes residual water output from the water producing facility (30), and
the exhaust from the power generating assembly (20) is provided to the feedwater heater (40) to the heat the residual water output from the water producing facility (30).

14. A method of providing water and power in a combined water and power production system, the method comprising:
generating (61) steam at a steam generator;
providing (62) the steam to a power generation assembly to generate power;
providing (63) the steam to a water production facility to produce first liquid water; and
heating (65) second liquid prior to supplying the second liquid water to the steam generator to generate the steam.

15. The method of claim 14, wherein heating the second liquid water used by the steam generator includes heating the second liquid water with exhaust from the power generation assembly.
